# FASCICULE DE BREVET EUROPEEN

(11) **EP 1 525 833 B1**
(45) Date de publication et mention de la délivrance du brevet: **04.10.2006**
(21) Numéro de dépôt: 04356165.3
(22) Date de dépôt: 12.10.2004
(51) Int. Cl.: A47J 37/08

(54) **Grille-pain**
Brotroster
Toaster

(30) Priorité: 24.10.2003 FR 0312474; 30.07.2004 FR 0408444
(43) Date de publication de la demande: 27.04.2005
(73) Titulaire: SEB S.A., 69130 Ecully (FR)
(72) Inventeur: Arnedo, Julian, 08031 Barcelona (ES); Mauffrey, Guy, 70280 Breuchotte (FR)
(74) Mandataire: Kiehl, Hubert

(56) Documents cités:
- EP-A- 0 048 769
- EP-A- 0 845 235
- US-A- 2 878 748
- US-A- 5 095 814
- US-A- 5 653 158
- US-A- 5 771 780
- US-B1- 6 205 910

## Description

La présente invention se rapporte au domaine technique des appareils électroménagers de type grille-pain, et plus particulièrement aux grille-pain dont le chariot peut être amené en une position complémentaire dite de remontée plus", position destinée à la récupération des petites tranches de pain.

De façon connue, un grille-pain comporte un chariot porte pain, qui est apte à se déplacer à l'intérieur d'un châssis, pour permettre de venir positionner les tranches de pain à griller en regard d'éléments chauffants. Le déplacement du chariot peut être effectué sous l'effet d'un effort exercé par l'utilisateur, ou bien par un ressort ou un élément de rappel, ou bien encore par un mécanisme motorisé.

On connaît, par le document EP 0 845 235, un grille-pain disposant d'un ressort de rappel à spires jointives présentant un évasement à l'une de ses extrémités supportant le chariot porte pain. Cette particularité permet, à l'aide d'un bras d'actionnement, un déplacement complémentaire du chariot vers un niveau supérieur de déchargement du pain.

Si certes, un tel appareil permet de récupérer facilement de petits morceaux de pain en réduisant les risques de brûlure, il est nécessaire pour l'utilisateur, de maintenir le bras d'actionnement en position haute pour accéder aux morceaux de pain.

De plus, un tel dispositif ne permet qu'une seule position de surélévation.

On connaît également, par le document US 5,095,814, un grille-pain dont le chariot porte pain est actionné par un organe de commande entre une position de déchargement du pain et une position basse de grillage. Le chariot peut être surélevé de sa position de déchargement afin de faciliter l'extraction des petites tranches de pain, à l'aide d'un dispositif comportant un bras de levier actionné par une manette distincte de l'organe de commande du chariot porte pain.

Par ailleurs, un certain nombre d'études d'ergonomie ont indiqué qu'une partie non négligeable des consommateurs n'apprécient pas d'actionner le bouton de commande du chariot en translation vers le bas et l'effort important qu'il est nécessaire d'exercer pour venir bloquer le chariot en position basse.

Un autre inconvénient de ces grille-pain dont le bouton de commande coulisse verticalement est la présence d'une fente dans la paroi du boîtier, qui représente une entrée possible de saletés ou de miettes à l'intérieur du grille-pain.

La présente invention vise à remédier à ces précédents inconvénients en proposant un grille-pain selon la revendication 1.

La présence d'une manette rotative dans la commande du chariot du grille-pain est une architecture nouvelle qui confère notamment une plus grande facilité d'utilisation que les manettes coulissant verticalement. De plus une seule manette permet de commander le chariot porte pain pour la réalisation d'un cycle de grillage, mais également pour la surélévation dudit chariot porte pain.

Avantageusement, la manette rotative d'actionnement est disposée sur l'une des parois latérales du châssis et l'axe de rotation de la manette rotative est parallèle à l'axe longitudinal du chariot porte pain.

Ainsi, par cette disposition, le déplacement en rotation de la commande évite de ménager une rainure dans le boîtier du grille pain pour le coulissement vertical des manettes présentées dans l'art antérieur. Il s'ensuit moins de risques de dysfonctionnement liés à l'introduction éventuelle d'éléments étrangers par ladite rainure, dans le souci de maintenir l'intérieur du grille-pain aussi séparé que possible de l'extérieur.

Par ailleurs, les différentes positions de la manette confèrent une plus grande lisibilité quant au fonctionnement du grille-pain.

Selon une première mise en oeuvre de l'invention, le dispositif à cames est une glissière ménagée dans l'extension du chariot porte pain. La glissière est donc en prise avec l'une des extrémités de la tige.

Une telle mise en oeuvre est simple en ne nécessitant qu'un nombre réduit de composants, gage de sa fiabilité.

Avantageusement, le moyen de rappel est un ressort dont l'axe est distant de l'axe de rotation de la manette d'une valeur r, le bras de levier de la tige d'actionnement présentant une longueur *R*, et le rapport *r*/*R* est inférieur à 0,5.

II paraît en effet important que la position du ressort soit en adéquation avec le bras de levier constitué par la tige coudée, afin que le bras de levier ait un effet notable sur la force nécessaire pour abaisser le chariot porte pain. Si le rapport *r*/*R* est trop élevé, l'effort nécessaire sera important et le bras de levier inefficace.

Avantageusement, le grille-pain dispose de moyens permettant de maintenir la tige et le chariot porte pain selon au moins deux niveaux de déchargement du pain.

Selon un mode préféré de réalisation, ces moyens consistent en au moins deux paliers ménagés dans la glissière.

Ces paliers permettent donc d'immobiliser le dispositif de commande et donc le chariot porte pain en des niveaux de déchargement du pain, ce qui évite notamment à l'utilisateur de maintenir, d'une main, l'organe de commande dans une position donnée pour se saisir, de l'autre main, des tranches de pain. Par cette solution, l'utilisateur dispose de ces deux mains pour extraire les tranches de pain du grille-pain. Ceci est d'autant plus important pour le niveau plus élevé de déchargement du pain, qui correspond à des tranches de pain plus petites, souvent plus difficiles à extraire du grille-pain.

Selon des variantes avantageuses, la glissière peut comporter un troisième, voire un quatrième palier afin de maintenir la tige et le chariot porte pain selon, respectivement, un troisième et un quatrième niveau de déchargement du pain, permettant d'offrir une position supplémentaire de déchargement du pain, qui peut être nécessaire pour des tranches de pain ou des produits à griller de faible hauteur.

Selon une seconde mise en oeuvre de l'invention, le dispositif à cames consiste en une glissière ménagée dans un bras monté en rotation sur le châssis du grille-pain par l'une de ses extrémités selon un axe de rotation y-y' sensiblement parallèle à l'axe x-x', l'autre extrémité étant engagée en coulissement dans une lumière sensiblement horizontale, ménagée dans l'extension du chariot porte pain.

Selon ce second mode de réalisation, le dispositif à cames comporte un découplage supplémentaire du mouvement par le bras qui permet d'amplifier le mouvement de rotation de la manette. L'effort de l'utilisateur pour actionner la manette est ainsi moindre.

Avantageusement selon ce mode de réalisation, le grille-pain dispose de moyens permettant de maintenir la tige et le chariot porte pain selon au moins un niveau de déchargement du pain permettant de charger / décharger le pain sans devoir maintenir le chariot porte pain dans cette position.

Selon cette variante, l'un des moyens pouvant être aisément réalisé consiste en ce qu'au moins une échancrure soit ménagée dans la glissière. Cette échancrure aura une forme proche d'un demi-cercle afin de bien retenir dans cette position, l'extrémité de la tige.

En complément ou en variante de cette échancrure, les moyens de maintien sont réalisés par des crans d'arrêt de rotation de la manette rotative, lesdits crans étant ménagés dans ladite manette. Il peut s'agir d'une lame ressort coopérant avec une surface ondulée qui réalise ainsi des crans de blocage, ou bien un système à bille et cavités correspondantes, la bille étant fixe et les cavités disposées en arc de cercle sur la manette, de sorte que la bille immobilise la manette en se logeant dans les cavités. D'autres dispositifs, connus en soi, peuvent être utilisés.

Avantageusement, la glissière comporte, à l'une de ses extrémités, une zone de coulissement sans palier pour le coulissement vertical du chariot porte pain entre la position de grillage et la première position de déchargement du pain.

Par cette construction, le chariot porte pain remonte de la position de grillage à la première position de déchargement du pain simplement par le moyen de rappel, sans interaction avec le mécanisme de remontée du chariot en des positions de déchargement du pain, enlevant ainsi toute contrainte du dispositif de commande au fonctionnement classique du grille-pain.

Selon une première variante de réalisation, la glissière comporte un troisième palier maintenant la tige coudée et le chariot porte pain en un troisième niveau de déchargement du pain,

Préférentiellement, le moyen de rappel est constitué d'un ressort à spires jointives présentant, à l'une de ses extrémités, un évasement supportant l'extension du chariot porte pain.

Un tel évasement, obtenu en élargissant les dernières spires jointives du ressort, permet de réaliser un rebord contre lequel s'appuie l'extension du chariot porte pain, sans autre liaison mécanique.

Avantageusement, la position de repos du ressort à spires jointives correspond à la première position de déchargement du pain. Ainsi, l'extension du chariot porte pain, reposant uniquement sur l'évasement du ressort, il est possible d'élever le chariot porte pain de sa première position de déchargement vers d'autres positions de déchargement du pain sans avoir à forcer le moyen de rappel, simplement par engagement mécanique entre le moyen de commande et l'extension du chariot porte pain.

Afin de faciliter et d'optimiser le déplacement du chariot porte pain, le grille-pain comporte au moins une tige de guidage traversant une partie cylindrique ménagée dans l'extension du chariot porte pain.

La manière de réaliser l'invention, ainsi que les avantages qui en découlent, sont illustrés par la description suivante de deux modes de réalisation, en référence aux figures annexées dans lesquelles :
- la figure 1 présente une vue en perspective d'un châssis de grille-pain équipé de la présente invention, selon un premier mode de mise en oeuvre,
- la figure 2 est une vue éclatée du mécanisme de déplacement du chariot porte pain conforme à l'invention, selon ce premier mode de mise en oeuvre,
- la figure 3 est un détail du mécanisme du premier mode de mise en oeuvre de l'invention,
- les figures 4, 5 et 6 sont des vues de face du châssis du grille-pain selon divers états de fonctionnement de ce premier mode de mise en oeuvre de l'invention,
- la figure 7 est une vue en perspective d'un grille-pain selon un second mode de mise en oeuvre de l'invention,
- la figure 8 présente une vue en perspective du châssis de grille-pain équipé de la présente invention, selon son second mode de mise en oeuvre,
- la figure 9 est une vue en perspective arrière du dispositif de commande du grille-pain selon le second mode de mise en oeuvre de l'invention,
- la figure 10 est une vue éclatée du dispositif de commande du chariot porte pain selon le second mode de mise en oeuvre de l'invention,
- la figure 11 est une vue en perspective d'un détail constitutif du dispositif de commande présenté figure 10,
- les figures 12 à 14 présentent des vues en perspective avant du dispositif de commande du grille-pain selon divers états de fonctionnement de ce second mode de mise en oeuvre de l'invention,
- la figure 15 est une vue en perspective arrière du dispositif de commande du grille-pain correspondant à l'état de fonctionnement présenté figure 14.

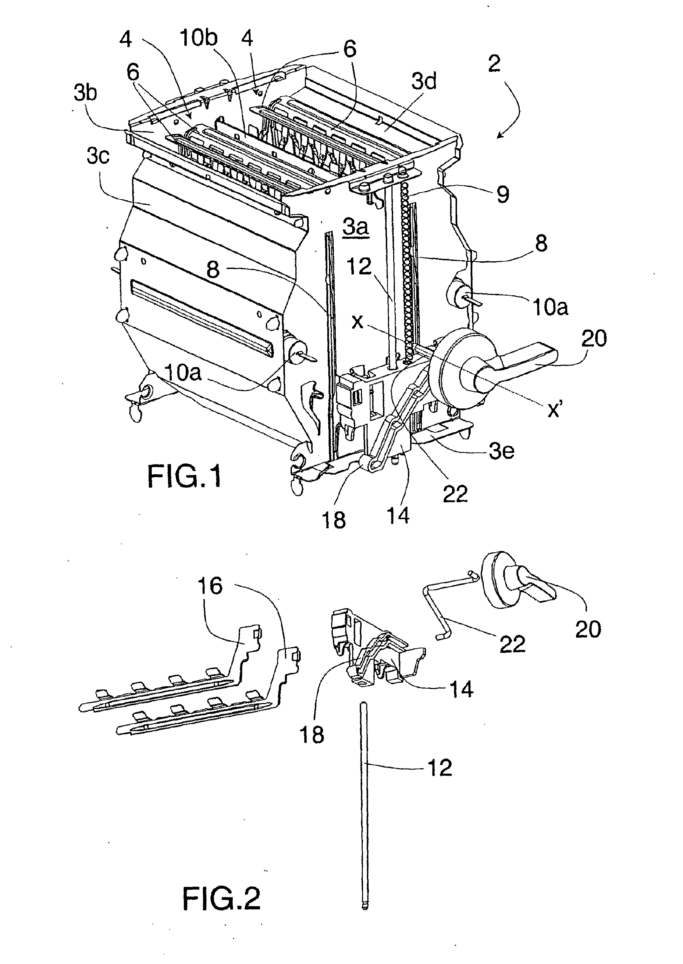

Dans le premier exemple de mise en oeuvre de l'invention décrit en détail ci-après en référence aux figures 1 à 6, le grille-pain n'est représenté que partiellement, le boîtier ayant notamment été omis. Ainsi, tel qu'illustré à la figure 1, le châssis 2 est composé de parois latérales 3c, 3d, d'une paroi avant 3a, d'une paroi arrière 3b et d'une paroi de fond 3e. Les parois latérales forment réflecteurs et sont équipées d'éléments chauffants 10a, qui, selon l'exemple proposé, sont des éléments quartz.

Le châssis est également équipé d'un élément chauffant central, en l'occurrence un élément plan 10b étendu, tel une plaque samicanite sur laquelle est enroulé un fil résistif.

Ainsi, les parois 3a, 3b, 3c, 3d et 3e, ainsi que l'élément chauffant central 10b, définissent deux chambres de chauffe 4. A l'intérieur de chaque chambre de chauffe sont articulées des grilles 6 de serrage du pain, tel qu'il est connu dans le domaine. Entre ces grilles de serrage se déplace verticalement un chariot porte pain 16, visible figure 2. Comme le montrent bien les figures 1 à 3, chaque chariot porte pain 16 est relié, à l'extérieur des chambres de chauffe 4, à une pièce 14 au travers de fentes verticales 8 ménagées dans la paroi 3a du châssis, permettant donc de manoeuvrer les chariots porte pain hors de la chambre de chauffe.

Cette pièce d'extension 14 des chariots porte pain est montée coulissante sur une tige verticale 12 de guidage agencée entre les parties haute et basse du châssis 2.

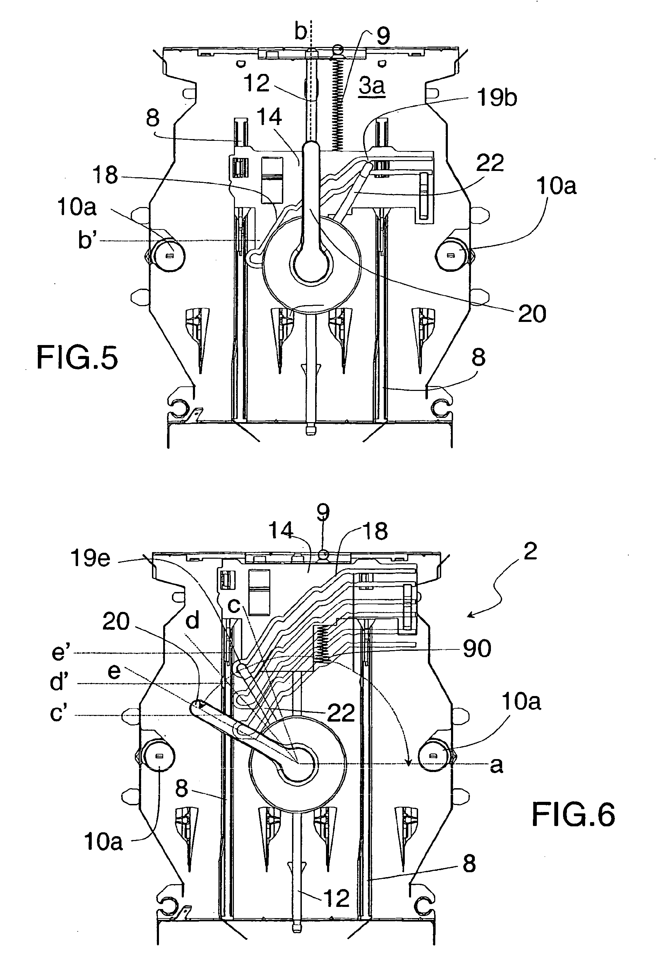

Par ailleurs, un moyen de rappel est disposé entre la partie supérieure du châssis 2 et la pièce d'extension 14. Selon l'exemple proposé, le moyen de rappel est un ressort 9 à spires jointives. La pièce d'extension 14 comporte alors une ouverture cylindrique verticale au travers de laquelle passe le ressort 9 qui se termine, de ce côté, par un évasement 90, tel qu'il est visible figure 6. Cet évasement, plus large que le diamètre de l'ouverture, permet de supporter la pièce d'extension 14.

Les avantages, intérêts et fonctionnement d'un tel ressort sont expliqués plus en détail dans le brevet EP 0 845 235.

Selon l'invention, le grille-pain comporte un mécanisme d'actionnement du chariot porte pain, comportant une manette pivotante 20 selon un axe x-x' sensiblement perpendiculaire à la face avant 3a du châssis 2. Une tige coudée rigide 22 est fixée, par l'une de ses extrémités, à la manette 20, sensiblement au niveau de l'axe x-x', le coude étant voisin de 90° et permettant à la tige 22 de s'étendre sensiblement parallèlement à la face avant 3a sur une distance R.

Afin que le pivotement de manette 20 et de la tige 22 s'effectue sans mouvement de translation, selon l'exemple de réalisation, la tige 22 sort hors du boîtier du grille-pain, non représenté, par une simple ouverture, interdisant ainsi tout mouvement, hors une rotation selon l'axe x-x' D'autres dispositions peuvent être envisagées pour bloquer les mouvements de translation de la tige 22 et de la manette 20 sans sortir du cadre de la présente invention.

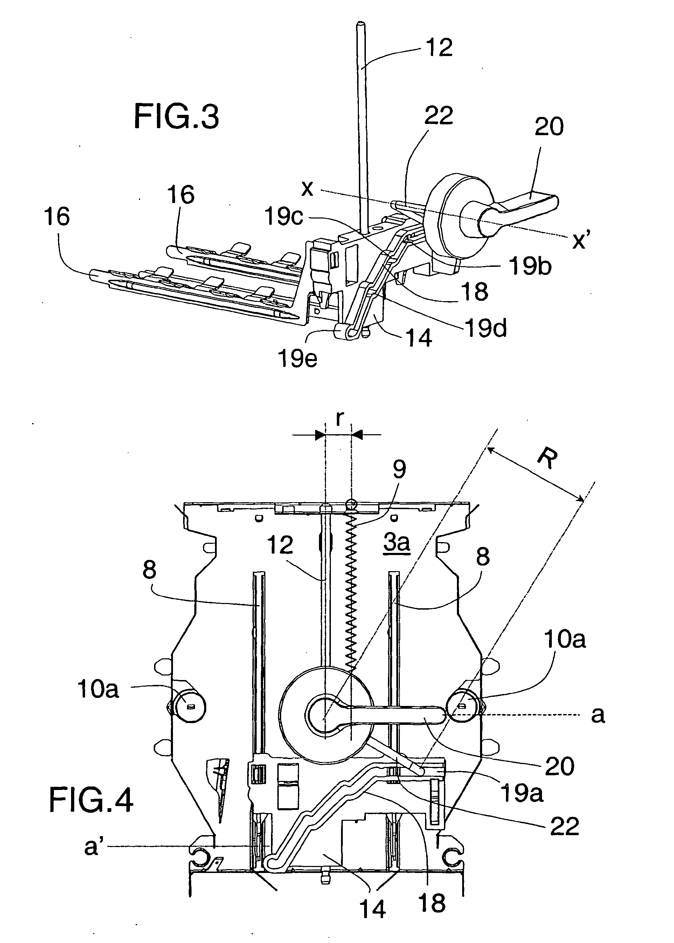

La seconde extrémité de la tige est logée dans la rainure d'une glissière 18 solidaire de la pièce d'extension 14. Cette glissière est globalement définie selon un arc de cercle en comportant une partie sensiblement horizontale 19a située vers l'une des extrémités de l'extension 14, et une partie courbe s'étendant jusque vers l'autre extrémité. Cette glissière possède quatre paliers 19b, 19c, 19d, 19e, tels que représentés figure 3.

Au repos, l'extrémité de la tige 22 est située dans la partie horizontale 19a de la glissière 18, à la limite de la zone courbe, au niveau du premier palier 19b, tel que représenté figure 5, la manette 20 se trouvant dans une position notée b, sensiblement verticale. Le chariot porte pain est alors situé à un niveau noté b'.

Selon l'une des caractéristiques de l'invention, le ressort 9 est un ressort à spires jointives, et est disposé sensiblement verticalement en étant espacé de l'axe x-x' de rotation de la manette d'une distance r. Le ressort est toutefois disposé du même côté que la portion coudée de la tige 22. En effet, un positionnement à l'opposé risquerait de bloquer les chariots porte pain par pivotement dans les fentes 8 de la pièce 14 suite à l'actionnement de la manette 20.

Cette distance r est bien plus courte que la distance R représentant le bras de levier du dispositif de commande afin que le couple appliqué à la glissière et donc au chariot porte pain, soit supérieur au couple de rappel du chariot par le ressort. Selon l'exemple présenté, le rapport r/R est voisin de 0,25.

Par ailleurs, dans cette position de repos, la pièce 14 repose sur le ressort 9 sans contrainte, c'est à dire que les spires du ressort sont jointives.

En fonctionnement, lorsque l'utilisateur désire faire griller une tranche de pain, il fait pivoter la manette 20 dans le sens horaire de la figure 5, afin de faire pivoter la tige 22 qui coulisse alors dans la partie horizontale 19a tout en entraînant vers le bas, par l'intermédiaire de la glissière, l'extension 14 guidée par la colonne 12, ainsi que le chariot porte pain, contre la force de rappel du ressort 9. Ce mouvement se poursuit jusqu'à ce qu'un moyen de maintien, non représenté, bloque le chariot porte pain en position basse. Ce moyen peut, par exemple, être un électroaimant, tel qu'il est connu dans le domaine.

Dans cette position représentée à la figure 4, la manette 20 occupe une position sensiblement horizontale notée a, le chariot porte pain étant alors au voisinage d'un niveau noté a'. Un cycle de grillage peut alors débuter, par alimentation des éléments chauffants, pendant un temps prédéterminé ou selon une mesure du grillage de pain, jusqu'au niveau souhaité.

A la fin du cycle de cuisson, l'alimentation des éléments chauffants est arrêtée et le moyen de maintien libère le chariot porte pain. Ce dernier remonte sous l'effet de rappel du ressort 9, jusqu'à la position de repos présentée figure 5. La force de rappel du ressort 9 induit un coulissement de la tige 22 dans la rainure 19a de la glissière avec un mouvement de rotation anti-horaire qui entraîne alors un même mouvement de la manette 20.

Dans cette position de déchargement du pain, l'utilisateur peut faire pivoter la manette dans le sens anti-horaire, entraînant l'extrémité de la tige 22 se trouvant dans la glissière 18, dans la partie courbe de celle-ci. Ceci a pour effet d'élever vers le haut l'extension 14 et donc le chariot porte pain.

Ce mouvement supplémentaire se réalise sans autre effort que celui de supporter les chariots porte pain et l'extension 14, puisque cette dernière coulisse alors le long du ressort 9, conformément à l'enseignement du brevet EP 0 845 235.

La présence des paliers 19c, 19d, 19e permet de maintenir la tige coudée en des positions stables, le chariot porte pain étant alors positionné respectivement à des niveaux *c*', *d*', *e*', et la manette rotative 20 en correspondance, étant arrêtée dans les positions c, d, e.

Il est toutefois souhaitable, compte tenu de l'orientation de la courbure de la glissière comportant les paliers, que la position de la tige coudée dans la glissière soit voisine de la position verticale afin que la tige ne glisse pas dans les paliers.

Ces niveaux supplémentaires permettent donc d'amener successivement le chariot porte pain 16 en des positions stables de plus en plus proches de la partie haute des chambres de grillage, ce qui permet d'extraire facilement tout type de tranches de pain coincées dans le grille-pain sans se brûler, tout en disposant de ses deux mains pour saisir les tranches de pain.

La manette rotative 20 permet donc, non seulement de descendre le chariot porte pain en position de grillage, mais également d'amener le chariot en des positions hautes et stables de sur-élévation par rapport à la position de déchargement du pain, afin de pouvoir récupérer de petites tranches ou des miettes de pain retenues dans les chambres de grillage.

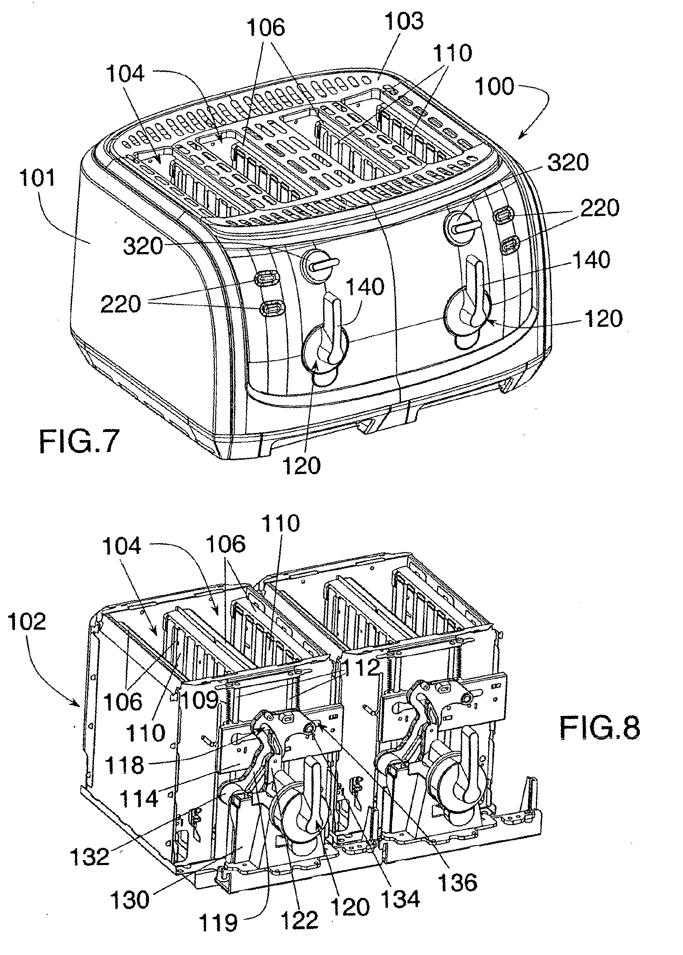

Selon un second exemple de mise en oeuvre de l'invention présenté aux figures 7 à 15, le grille-pain 100 est un grille-pain dit « quatre tranches », comportant quatre chambres de chauffe 104. Le châssis 102 est présenté figure 8. De façon similaire au premier mode de mise en oeuvre de l'invention, le châssis 102 comporte des parois délimitant les chambres de chauffe. A l'intérieur de celles-ci sont articulées des grilles de serrage 106, de façon similaire aux grilles 6. Les éléments chauffants sont toutefois, dans cet exemple de réalisation, des plaques planes 110 de mica, de type samicanite® sur lesquelles sont bobinés des fils résistifs alimentés en courant électrique.

Le grille-pain est habillé d'une coque 101 en plastique et possède également un toit 103 en forme de cuvette percé d'une multitude de trous, et permettant de réchauffer des pains et viennoiseries.

En face avant, le grille-pain dispose de deux dispositifs de commande 120, chaque dispositif présentant extérieurement une manette d'actionnement 140 permettant de contrôler le fonctionnement de deux chambres de chauffe.

Tel qu'il est bien visible figure 8, le grille-pain selon ce second mode de mise en oeuvre correspond à la juxtaposition, sous un même boîtier, de deux châssis renfermant deux chambres de chauffe, à l'instar du châssis présenté figure 1, avec chacun son propre dispositif 120 de commande.

Sur la figure 7 sont également visibles des boutons de réglage 320 du degré de grillage du pain, ainsi que des touches de fonction 220 permettant un traitement spécifique du pain (réchauffage, décongélation,...)

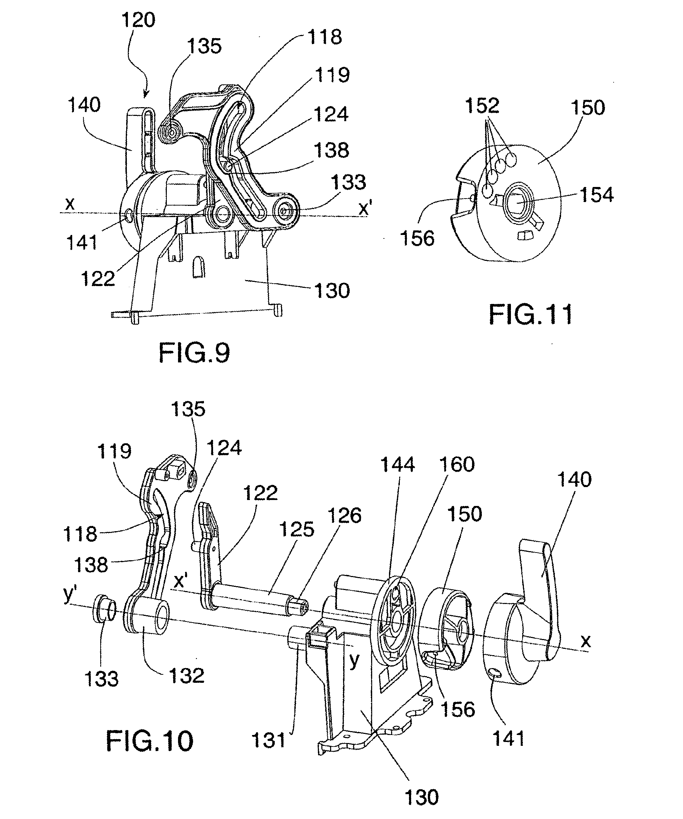

Les dispositifs de commande 120 du chariot porte pain sont présentés dans leur agencement sur le châssis du grille-pain figure 8. On se référera également aux figures 9 à 11 pour leur description.

Ainsi, la manette d'actionnement 140 est liée à une tige coudée 122 présentant, à l'une de ses extrémités, un axe 125 représentant l'axe de rotation x-x' de la manette 140. Cette dernière est donc montée sur l'axe 125, par l'intermédiaire d'une pièce circulaire 150, la manette 140 étant fixée sur la pièce 150 par une vis (les trous de vis 141 et 156 sont bien visibles figure 10). L'extrémité 126 de l'axe 125 présente une géométrie non circulaire et est en prise avec une forme complémentaire correspondante 154 de la pièce 150 afin que le mouvement de rotation de la manette 140 entraîne en rotation la tige coudée 122.

En variante, l'axe 125 pourrait être issu de la manette 140, la tige 122 étant alors droite.

La manette rotative montée sur la pièce 150, et la tige 122, se trouvent de part et d'autre d'un support 130 fixé au châssis ou au boîtier du grille-pain, l'axe 125 traversant ce support par une ouverture appropriée. Ce support 130 dispose d'une face 144 de contact avec la pièce intermédiaire 150, une petite bille 160 étant disposée légèrement en proéminence de cette face.

Par ailleurs, tel que représenté figure 11, la pièce intermédiaire 150 comporte, sur la face en contact avec le support 130, des cavités 152 disposées en arc de cercle. Ces cavités coopèrent avec la bille 160 pour maintenir la manette en des positions définies par les cavités tel qu'il sera expliqué ultérieurement.

A l'opposé de l'axe 125, la tige 122 comporte un téton 124 sensiblement parallèle à l'axe 125, dans la direction opposée à cet axe. Ce téton est en prise avec une glissière 118 ménagée dans un bras 119. La glissière comporte une zone d'arrêt 138 du téton 124, par une échancrure en arc de cercle voisine d'un demi-cercle. Cette zone est disposée sensiblement au milieu de la longueur de la glissière.

Le bras 119 est articulé autour d'un axe 131 représentant un axe de rotation y-y' parallèle à l'axe x-x', le bras 119 comportant une portion de tube 132, au travers duquel vient se loger l'axe 131, un rivet 133 venant ensuite empêcher le coulissement du bras 119 sur l'axe. La portion de tube 132 est disposée à l'une des extrémités du bras 119.

A l'autre extrémité du bras 119 se trouve un emplacement 135 d'un rivet 134 ou organe similaire, venant en prise avec une lumière 136 ménagée dans une extension 114 des chariots porte pain. La lumière 136 de chaque pièce d'extension 114 est, de préférence, sensiblement horizontale.

Les pièces d'extension 114 sont similaires à la pièce d'extension 14 présentée dans le premier exemple de mise en oeuvre de l'invention. Ainsi, ces pièces 114 coulissent le long de deux colonnes verticales 112, contre la force de rappel de deux ressorts 109. Ces derniers sont agencés entre la partie supérieure du châssis 102 et la pièce d'extension 114.

Ces ressorts de rappel peuvent être à spires jointives. La pièce d'extension 114 comporte alors une ouverture cylindrique verticale au travers de laquelle passe le ressort 109 qui se termine, de ce côté, par un évasement, plus large que le diamètre de l'ouverture, ce qui permet de supporter la pièce d'extension 114.

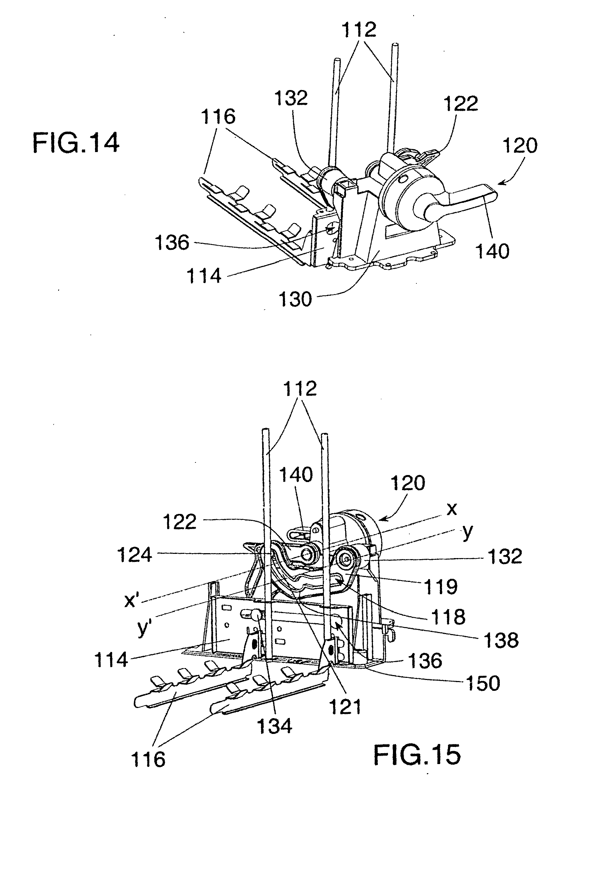

Le grille-pain comporte deux pièces d'extension 114. Sur chacune d'elle sont reliés deux chariots porte pain 116, tel qu'il est bien visible figure 15.

Il est bien évident que la présente invention peut s'appliquer pour la commande d'un nombre quelconque de chariot porte pain, que ce soit selon le premier ou le second mode de mise en oeuvre de l'invention présenté.

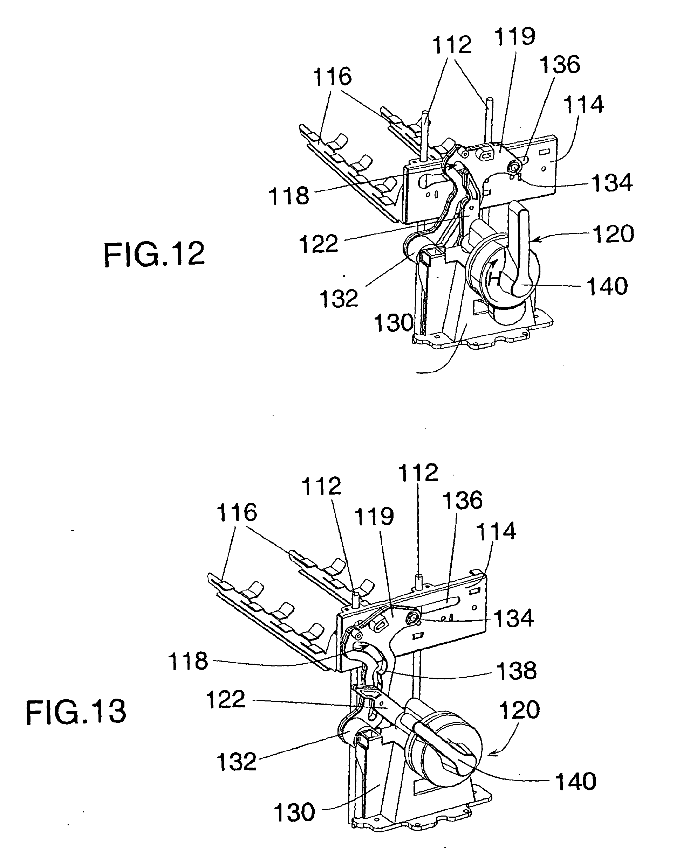

Le fonctionnement du grille-pain selon ce second mode de mise en oeuvre est présenté aux figures 12 à 15. Ainsi, figure 12, le grille-pain est dans une position d'accueil du pain, ou première position de chargement/déchargement du pain, le téton 124 de la tige 122 étant retenu dans la zone d'arrêt 138 de la glissière 118, tel qu'il est également visible figure 9. Dans cette position, l'utilisateur peut disposer des tranches de pain à griller dans les chambres de chauffe.

Pour enclencher un cycle de chauffe, l'utilisateur tourne la manette 140 dans le sens horaire H afin de l'amener sensiblement horizontalement, tel que représenté aux figures 14 et 15. Ce mouvement provoque une rotation de la tige 122 autour de l'axe x-x', selon le sens horaire *H.* Par l'interaction entre le téton 124 de la tige 122 et la glissière 118, le bras 119 pivote également dans le sens horaire H, autour de l'axe y-y'. Tel qu'il est bien visible figure 15, le téton 124 pivote dans une partie 121 de la glissière 118 exempte de zone d'arrêt, ce qui contribue à créer un mouvement continu de rotation

Ce déplacement provoque un mouvement du rivet 134 selon un arc de cercle vers le bas. Ce mouvement peut être décomposé en un déplacement horizontal et un déplacement vertical. Le déplacement horizontal est réalisé dans la lumière 136, le déplacement vertical entraînant un coulissement vers le bas de la pièce d'extension 114, et donc des chariots porte pain 116.

Dans cette position dite position basse ou position de grillage, la pièce d'extension 114 déclenche un cycle de grillage tout en étant maintenue dans cette position par tout moyen connu en soi (non représenté). II peut s'agir par exemple d'un électroaimant qui coopère avec ladite pièce d'extension afin de maintenir cette dernière contre la force de rappel des ressorts 109, la descente de la pièce d'extension provoquant par ailleurs l'alimentation des éléments chauffants par la fermeture du circuit d'alimentation électrique desdits éléments.

A la fin du cycle de grillage, l'électroaimant, ou le moyen de retenue de la pièce d'extension 114, libère ladite pièce qui remonte sous la traction des ressorts 109. Ce mouvement entraîne une rotation dans le sens anti-horaire du bras 119 qui à son tour provoque une rotation, dans ce même sens, de la tige 122.

Les mouvements des différents organes sont stoppés par l'arrêt du téton 124 dans la zone d'arrêt 138, ramenant les différents organes dans la position initiale présentée figure 12. L'utilisateur peut alors enlever le pain des chambres de chauffe. Toutefois, et notamment lorsque de petits morceaux de pain sont mis à griller, l'utilisateur peut surélever les chariots porte pain par rapport à ce premier niveau de déchargement du pain, en tournant la manette 140 depuis sa position verticale, dans le sens anti-horaire.

Une telle action est représentée figure 13. Dans ce mouvement, la manette peut être stoppée en plusieurs positions par coopération entre les cavités 152 et la bille 160. Le passage d'une cavité à une autre étant réalisé, soit par l'élasticité des pièces entre elles, soit en repoussant la bille dans son logement contre la force d'un petit ressort.

Selon l'exemple proposé, quatre cavités sont présentes sur la pièce 150, permettant ainsi de positionner la manette 140 selon quatre positions angulaires différentes. Le passage de la première cavité aux suivantes a comme effet de redresser le bras 119, le rivet 134 décrivant alors un arc de cercle vers le haut, présentant une composant horizontale qui se réalise dans la lumière 136, ainsi qu'une composant verticale qui permet d'entraîner la pièce d'extension 114, et donc le chariot porte pain, vers le haut. II est alors possible de retirer plus facilement les petites tranches de pain, le chariot étant placé dans une position stable, ce qui permet notamment à l'utilisateur de disposer de ses deux mains pour la préhension desdites tranches de pain.

Il ressort de ce second mode de réalisation de l'invention une amplification du mouvement obtenue notamment par le fait que la distance entre le rivet coopérant avec l'extension 114 et l'axe de rotation y-y' est supérieur à la longueur de la glissière, et par la proximité des axes x-x' et y-y'.

La présente invention n'est pas limitée aux deux exemples de mise en oeuvre présentés, mais couvre également des dispositifs où les moyens de maintien de la poignée sont réalisés par des équivalents techniques, par exemple des crantages. II est également possible de réaliser tous les moyens de maintien au niveau de la poignée, à l'aide de dispositifs présentés ou des dispositifs similaires tels des crantages.

Par ailleurs, il peut être envisagé une commande simultanée de plusieurs pièces d'extension 114 par la même poignée.

## Revendications

1. Grille-pain (100), comportant un châssis (2, 102) à l'intérieur duquel s'étend au moins une chambre de chauffe (4, 104), munie, à son voisinage, d'éléments chauffants (10a, 10b, 110), et ouverte en partie supérieure du châssis (2, 102), ledit grille-pain (100) comportant également au moins un chariot porte pain (16, 116) apte à se déplacer selon un mouvement alternatif vertical par rapport au châssis (2, 102), un moyen de blocage pour positionner le chariot (16, 116) à un niveau bas correspondant à une position de grillage, un moyen de rappel (9, 109) du chariot (16, 116) monté entre le châssis (2, 102) et une extension (14, 114) du chariot (16, 116) afin de ramener le chariot vers un niveau intermédiaire correspondant à une position de déchargement du pain, ainsi qu'un moyen de commande (120) du positionnement du chariot porte pain entre le niveau bas et au moins un niveau haut de surélévation ou par rapport au niveau intermédiaire de déchargement du pain, **caractérisé en ce que** le moyen de commande (120) consiste en une manette rotative d'actionnement (20, 140) associée, selon son axe de rotation x-x', à l'une des extrémités (125) d'une tige (22, 122) disposée perpendiculairement à l'axe de rotation x-x' et constituant un bras de levier, l'autre extrémité (124) de la tige (22, 122) étant en prise avec un dispositif à cames relié à l'extension (14, 114) du chariot porte pain (16, 116) afin de transformer le mouvement de rotation de la manette (20, 140) et de la tige (22, 122) en mouvement vertical du chariot porte pain (16, 116).

2. Grille-pain selon la revendication précédente, **caractérisé en ce que** la manette rotative d'actionnement (20, 140) est disposée sur l'une des parois latérales (3a, 3b) du châssis (2, 102) et **en ce que** l'axe de rotation x-x' de la manette rotative (20, 140) est parallèle à l'axe longitudinal du chariot porte pain (16, 116).

3. Grille-pain selon l'une des revendications précédentes, **caractérisé en ce que** le dispositif à cames est une glissière (18) ménagée dans l'extension (14) du chariot porte pain.

4. Grille-pain selon la revendication précédente, **caractérisé en ce que** le moyen de rappel est un ressort (9) dont l'axe est distant de l'axe x-x' d'une valeur r, le bras de levier de la tige d'actionnement présentant une longueur *R*, et **en ce que** le rapport *r*/*R* est inférieur à 0,5.

5. Grille-pain selon l'une des revendications précédentes, **caractérisé en ce qu**'il dispose de moyens permettant de maintenir la tige (22) et le chariot porte pain (16) selon au moins deux niveaux de déchargement du pain.

6. Grille-pain selon la revendication précédente, **caractérisé en ce que** les moyens consistent en au moins deux paliers (19b, 19c, 19d, 19e) ménagés dans la glissière (18).

7. Grille-pain selon la revendication précédente, **caractérisé en ce que** la glissière (18) comporte un troisième palier maintenant la tige (22) et le chariot porte pain (16) en un troisième niveau de déchargement du pain.

8. Grille-pain selon la revendication précédente, **caractérisé en ce que** la glissière (18) comporte un quatrième palier maintenant la tige (22) et le chariot porte pain (16) en un quatrième niveau de déchargement du pain.

9. Grille-pain (100) selon l'une des revendications 1 ou 2, **caractérisé en ce que** le dispositif à cames consiste en une glissière (118) ménagée dans un bras (119) monté en rotation sur le châssis (102) du grille-pain (100) par l'une de ses extrémités (132) selon un axe de rotation y-y' sensiblement parallèle à l'axe x-x', l'autre extrémité (135) étant engagée en coulissement dans une lumière (136) sensiblement horizontale, ménagée dans l'extension (114) du chariot porte pain (116).

10. Grille-pain (100) selon la revendication précédente, **caractérisé en ce qu**'il dispose de moyens permettant de maintenir la tige (122) et le chariot porte pain (116) selon au moins un niveau de déchargement du pain.

11. Grille-pain (100) selon la revendication précédente, **caractérisé en ce que** les moyens consistent en au moins une échancrure (138) ménagée dans la glissière (118).

12. Grille-pain (100) selon l'une des revendications 10 ou 11, **caractérisé en ce que** les moyens consistent en des crans d'arrêt (152) de rotation de la manette rotative (140) ménagés dans ladite manette.

13. Grille-pain (100) selon l'une des revendications précédentes, **caractérisé en ce que** la glissière (18, 118) comporte, à l'une de ses extrémités, une zone de coulissement (19a, 121) sans palier pour le coulissement vertical du chariot porte pain (16, 116) entre la position de grillage et la première position de déchargement du pain.

14. Grille-pain (100) selon l'une des revendications précédentes, **caractérisé en ce que** le moyen de rappel est constitué d'un ressort à spires jointives (9, 109) présentant, à l'une de ses extrémités, un évasement (90) supportant l'extension (14, 114) du chariot porte pain (16, 116).

15. Grille-pain (100) selon la revendication précédente, **caractérisé en ce que** la position de repos du ressort à spires jointives (9, 109) correspond à la première position de déchargement du pain.

16. Grille-pain (100) selon l'une des revendications précédentes, **caractérisé en ce qu**'il comporte au moins une tige de guidage (12, 112) pour optimiser le déplacement du chariot porte pain (16, 116), en traversant une partie cylindrique ménagée dans l'extension (14, 114) du chariot (16, 116).

## Claims

1. A toaster (100) comprising a frame (2, 102) inside which at least one heater chamber (4, 104) extends, said at least one heater chamber being provided, in its vicinity, with heater elements (10a, 10b, 110), and being open at the top portion of the frame (2, 102), said toaster (100) further comprising at least one bread-holding carriage (16, 116) suitable for moving vertically up and down relative to the frame (2, 102), locking means for positioning the carriage (16, 116) at a low level corresponding to a toasting position, return means (9, 109) for urging the carriage (16, 116) to return and mounted between the frame (2, 102) and an extension (14, 114) of the carriage (16, 116) in order to bring the carriage back to an intermediate level corresponding to a toast unloading position, and control means (120) for controlling the positioning of the bread-holding carriage, between the low level and at least one extra-lift high level beyond the toast unloading intermediate level, said toaster being **characterized in that** the control means (120) consist of a rotary actuator lever (20, 140) associated, on its pivot axis x-x', with one of the ends (125) of a rod (22, 122) disposed perpendicularly to the pivot axis x-x' and constituting a lever arm, the other end (124) of the rod (22, 122) being in engagement with a cam device and connected to the extension (14, 114) of the bread-holding carriage (16, 116) in order to transform the movement in rotation of the control lever (20, 140) and of the rod (22, 122) into a vertical movement of the bread-holding carriage (16, 116).

2. A toaster according to the preceding claim, **characterized in that** the rotary actuator lever (20, 140) is disposed on one of the side walls (3a, 3b) of the frame (2, 102), and **in that** the pivot axis x-x' of the rotary control lever (20, 140) is parallel to the longitudinal axis of the bread-holding carriage (16, 116).

3. A toaster according to any preceding claim, **characterized in that** the cam device is a slideway (18) provided in the extension (14) of the bread-holding carriage.

4. A toaster according to any preceding claim, **characterized in that** the return means are constituted by a spring (9) whose axis is spaced apart from the axis x-x' by a value r, the lever arm of the actuator rod presenting a length R, and **in that** the ratio r/R is less than 0.5.

5. A toaster according to any preceding claim, **characterized in that** it further comprises means making it possible to hold the rod (22) and the bread-holding carriage (16) at at least two toast unloading levels.

6. A toaster according to the preceding claim, **characterized in that** said means consist of at least two flat stages (19b, 19c, 19d, 19e) provided in the slideway (18).

7. A toaster according to the preceding claim, **characterized in that** the slideway (18) has a third flat stage for holding the rod (22) and the bread-holding carriage (16) at a third toast unloading level.

8. A toaster according to the preceding claim, **characterized in that** the slideway (18) has a fourth flat stage for holding the rod (22) and the bread-holding carriage (16) at a fourth toast unloading level.

9. A toaster (100) according to claim 1 or claim 2, **characterized in that** the cam device consists of a slideway (118) provided in an arm (119) mounted to pivot on the frame (102) of the toaster (100) via one of its ends (132) about a pivot axis y-y' substantially parallel to the axis x-x', the other end (135) being slidably engaged in a substantially horizontal slot (136), provided in the extension (114) of the bread-holding carriage (116).

10. A toaster (100) according to the preceding claim, **characterized in that** it has means making it possible to hold the rod (122) and the bread-holding carriage (116) at at least one toast unloading level.

11. A toaster (100) according to the preceding claim, **characterized in that** the means consist of at least one recess (138) provided in the slideway (118).

12. A toaster (100) according to claim 10 or claim 11, **characterized in that** said means consist in stop notches (152) for stopping pivoting of the rotary control lever (140) and provided in said lever.

13. A toaster (100) according to any preceding claim, **characterized in that**, at one of its ends, the slideway (18, 118) has a slide zone (19a, 121) without any flat stage for sliding the bread-holding carriage (16, 116) vertically between the toasting position and the first toast unloading position.

14. A toaster (100) according to any preceding claim, **characterized in that** the return means are constituted by a spring having touching turns (9, 109) and presenting, at one of its ends, a flare (90) supporting the extension (14, 114) of the bread-holding carriage (16, 116).

15. A toaster (100) according to the preceding claim, **characterized in that** the rest position of the spring (9, 109) having touching turns corresponds to the first toast unloading position.

16. A toaster (100) according to any preceding claim, **characterized in that** it further comprises at least one guide rod (12, 112) for optimizing the movement of the bread-holding carriage (16, 116), by passing through a cylindrical portion provided in the extension (14, 114) of the carriage (16, 116).

## Patentansprüche

1. Brotröster (100) mit einem Gestell (2, 102), innerhalb dessen sich mindestens eine Heizkammer (4, 104), erstreckt, die mit in ihrer Nähe liegenden Heizelementen (10a, 10b, 110) versehen ist und im oberen Teil des Gestells (2, 102) offen ist, wobei der Brotröster (100) auch mindestens einen Brotträgerschlitten (16, 116) aufweist, der entlang einer alternierenden, senkrechten Bewegung bezüglich des Gestells (2, 102) verschiebbar ist, einem Blockierungsmittel, um den Schlitten (16, 116) in einer tiefen Stellung zu positionieren, die einer Röstposition entspricht, einem Mittel zum Zurückstellen (9, 109) des Schlittens (16, 116), das zwischen dem Gestell (2, 102) und einem Ansatz (14, 114) des Schlittens (16, 116) angebracht ist, um den Schlitten zu einer Zwischenstellung zurückzubringen, die einer Position zum Entnehmen des Brots entspricht, sowie ein Mittel (120) zur Steuerung der Positionierung des Brotträgerschlittens zwischen der tiefen Stellung und mindestens einer gegenüber der Zwischenstellung zum Entnehmen des Brots erhöhten Stellung des Brots, **dadurch gekennzeichnet, dass** das Steuermittel (120) aus einem drehbaren Betätigungsgriff (20, 140) besteht, der entlang seiner Drehachse x-x' einem der Enden (125) einer Stange (22, 122) zugeordnet ist, die senkrecht zur Drehachse x-x' angeordnet ist und einen Hebelarm bildet, wobei das andere Ende (124) der Stange (22, 122) mit einer mit Vorsprüngen versehenen Vorrichtung in Eingriff steht, die mit dem Ansatz (14, 114) des Brotträgerschlittens (16, 116) verbunden ist, um die Drehbewegung des Griffs (20, 140) und der Stange (22, 122) in eine vertikale Bewegung des Brotträgerschlittens (16, 116) umzuwandeln.

2. Brotröster nach dem vorhergehenden Anspruch, **dadurch gekennzeichnet, dass** der drehbare Betätigungsgriff (20, 140) an einer der Seitenwände (3a, 3b) des Gestells (2, 102) angeordnet ist und dass die Drehachse x-x' des drehbaren Griffs (20, 140) parallel zur Längsachse des Brotträgerschlittens (16, 116) ist.

3. Brotröster nach einem der vorhergehenden Ansprüche, **dadurch gekennzeichnet, dass** die mit Vorsprüngen versehene Vorrichtung eine Gleitführung (18) ist, die in dem Ansatz (14) des Brotträgerschlittens eingebracht ist.

4. Brotröster nach dem vorhergehenden Anspruch, **dadurch gekennzeichnet, dass** das Rückstellmittel eine Feder (9) ist, deren Achse von der Achse x-x' um einen Wert *r* entfernt ist, wobei der Hebelarm der Betätigungsstange eine Länge *R* aufweist, und dass das Verhältnis *rlR* kleiner ist als 0,5.

5. Brotröster nach einem der vorhergehenden Ansprüche, **dadurch gekennzeichnet, dass** er über Mittel verfügt, die es ermöglichen, die Stange (22) und den Brotträgerschlitten (16) entlang mindestens zwei Stellungen zum Entnehmen des Brots zu halten.

6. Brotröster nach dem vorhergehenden Anspruch, **dadurch gekennzeichnet, dass** die Mittel aus mindestens zwei Stufen (19b, 19c, 19d, 19e) bestehen, die in der Gleitführung (18) eingebracht sind.

7. Brotröster nach dem vorhergehenden Anspruch, **dadurch gekennzeichnet, dass** die Gleitführung (18) eine dritte Stufe aufweist, die die Stange (22) und den Brotträgerschlitten (16) in einer dritten Stellung zum Entnehmen des Brots hält.

8. Brotröster nach dem vorhergehenden Anspruch, **dadurch gekennzeichnet, dass** die Gleitführung (18) eine vierte Stufe aufweist, die die Stange (22) und den Brotträgerschlitten in einer vierten Stellung zum Entnehmen des Brots hält.

9. Brotröster nach einem der Ansprüche 1 oder 2, **dadurch gekennzeichnet, dass** die mit Vorsprüngen versehene Vorrichtung aus einer Gleitführung (118) besteht, die in einem Arm (119) eingebracht ist, welcher am Gestell (102) des Brotrösters (100) mittels eines seiner Enden (132) entlang einer Drehachse y-y' drehbar angebracht ist, die im Wesentlichen parallel zur Achse x-x' ist, wobei das andere Ende (135) in einem im Wesentlichen horizontalen Schlitz (136) in Eingriff steht, der in den Ansatz (114) des Brotträgerschlittens eingebracht ist.

10. Brotröster (100) nach dem vorhergehenden Anspruch, **dadurch gekennzeichnet, dass** es über Mittel verfügt, die es ermöglichen, die Stange (122) und den Brotträgerschlitten (116) entlang mindestens einer Stellung zum Entnehmen des Brots zu halten.

11. Brotröster (100) nach dem vorhergehenden Anspruch, **dadurch gekennzeichnet, dass** die Mittel aus mindestens einer Aussparung (138) bestehen, die in der Gleitführung (118) eingebracht ist.

12. Brotröster (100) nach einem der Ansprüche 10 oder 11, **dadurch gekennzeichnet, dass** die Mittel aus Kerben (152) bestehen, die im Griff eingebracht sind, um die Drehung des drehbaren Griffs (140) zu sperren.

13. Brotröster (100) nach einem der vorhergehenden Ansprüche, **dadurch gekennzeichnet, dass** die Gleitführung (18, 118) an einer ihrer Enden einen stufenlosen Gleitbereich (19a, 121) aufweist, damit der Brotträgerschlitten (16, 116) zwischen der Röstposition und der ersten Position zum Entnehmen des Brots vertikal gleiten kann.

14. Brotröster (100) nach einem der vorhergehenden Ansprüche, **dadurch gekennzeichnet, dass** das Rückstellmittel aus einer Feder mit aneinanderstoßenden Windungen (9, 109) besteht, die an einem ihrer Enden eine Verbreiterung (90) aufweist, die den Ansatz (14, 114) des Brotträgerschlittens abstützt.

15. Brotröster (100) nach dem vorhergehenden Anspruch, **dadurch gekennzeichnet, dass** die Ruheposition der Feder mit aneinanderstoßenden Windungen (9, 109) der ersten Position zum Entnehmen des Brots entspricht.

16. Brotröster (100) nach einem der vorhergehenden Ansprüche, **dadurch gekennzeichnet, dass** er mindestens eine Führungsstange (12, 112) aufweist, um die Verschiebung des Brotträgerschlittens (16, 116) zu optimieren, die einen im Ansatz (14, 114) des Brotträgerschlittens (16, 116) angebrachten zylindrischen Teil durchsetzt.
